(19) Europäisches Patentamt
European Patent Office
Office européen des brevets

(11) **EP 4 009 170 B1**

(12) **EUROPEAN PATENT SPECIFICATION**

(45) Date of publication and mention
of the grant of the patent:
**22.11.2023 Bulletin 2023/47**

(21) Application number: **21178094.5**

(22) Date of filing: **07.06.2021**

(51) International Patent Classification (IPC):
*G06F 9/48* *(2006.01)*       *G06F 3/06* *(2006.01)*

(52) Cooperative Patent Classification (CPC):
**G06Q 30/0283; G06F 9/5011**

(54) **DATA MANAGEMENT**

DATENVERWALTUNG

GESTION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2020   CN 202011408730**

(43) Date of publication of application:
**08.06.2022   Bulletin 2022/23**

(73) Proprietor: **BEIJING BAIDU NETCOM SCIENCE
AND
TECHNOLOGY CO. LTD.
100085 Beijing (CN)**

(72) Inventors:
• **LIU, Ji
Beijing, 100085 (CN)**

• **DOU, Dejing
Beijing, 100085 (CN)**
• **HUANG, Jizhou
Beijing, 100085 (CN)**
• **LI, Qingyang
Beijing, 100085 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
**WO-A2-2005/109212     US-B1- 9 760 306
US-B2- 10 671 290**

**Description**

**Technical Field**

The present disclosure relates to the technical field of data processing and cloud computing, and in particular to a computer-implemented method for data management, a data management system, a non-transient computer-readable storage medium, and a computer program product.

**Background Art**

User data can be stored in different storage locations, and the data stored sometimes needs to be retrieved to execute a task. Storing data in different storage locations may mean different costs to users, and therefore, optimizing the data storage locations to obtain a better user experience will be what the users expect.

Cloud computing refers to a technology system that accesses a flexible and scalable shared physical or virtual resource pool via a network, and deploys and manages resources in a self-service manner as required, wherein the resources may comprise a server, an operating system, a network, software, an application, a storage device, etc. The use of cloud computing technologies can provide efficient and powerful data processing capabilities for application and model training of artificial intelligence, blockchain, and other technologies.

The methods described in this section are not necessarily methods that have been previously conceived or employed. It should not be assumed that any of the methods described in this section are considered to be the prior art just because they are included in this section, unless otherwise indicated expressly. Similarly, the problem mentioned in this section should not be considered to be universally recognized in any prior art, unless otherwise indicated expressly.

US 10,671,290 B2 discloses a control method of hybrid storage. Each HDD-type storage device in the storage system is connected to the SSD-type storage device. Each HDD-type storage device and each SSD-type storage device stores one or more data blocks respectively. Access information of each data block stored in a storage device is periodically acquired. A storage location of each data block in the storage system is adjusted according to the acquired access information of each data block. By using the technical solution of the present disclosure, the storage location of the data block is dynamically configured according to an access frequency so that advantages of different storage devices are fully utilized.

**Summary of the Invention**

The present invention is defined in the independent claims. Particular embodiments are set out in the respective dependent claims.

**Brief Description of the Drawings**

The drawings exemplarily show embodiments and form a part of the specification, and are used to explain exemplary implementations of the embodiments together with a written description of the specification. The embodiments shown are merely for illustrative purposes and do not limit the scope of the claims. Throughout the drawings, identical reference signs denote similar but not necessarily identical elements.

Fig. 1 is a schematic diagram of an exemplary system in which various methods described herein can be implemented according to an embodiment of the present disclosure;
Fig. 2 is a flowchart of a data management method according to an embodiment of the present disclosure;
Fig. 3 is a flowchart of a data management method according to another embodiment of the present disclosure;
Fig. 4 is an example functional module diagram of a data management platform for implementing an embodiment of the present disclosure;
Fig. 5 is an example underlying hardware architecture diagram of a data management platform for implementing an embodiment of the present disclosure;
Fig. 6 shows a task workflow of a data management platform according to an embodiment of the present disclosure;
Fig. 7 is a flowchart of storing data by a data user according to an embodiment of the present disclosure;
Fig. 8 is a flowchart of requesting to execute a task by a program user according to an embodiment of the present disclosure;
Fig. 9 is a structural block diagram of a data management apparatus according to an embodiment of the present disclosure; and
Fig. 10 is a structural block diagram of an exemplary server and client that can be used to implement an embodiment of the present disclosure.

**Detailed Description of Embodiments**

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, it may be one or more, unless otherwise expressly indicated in the context. Moreover, the term "and/or" used in the present disclosure encompasses any and all possible combinations of listed items.

Embodiments of the present disclosure are described in detail below in conjunction with the drawings.

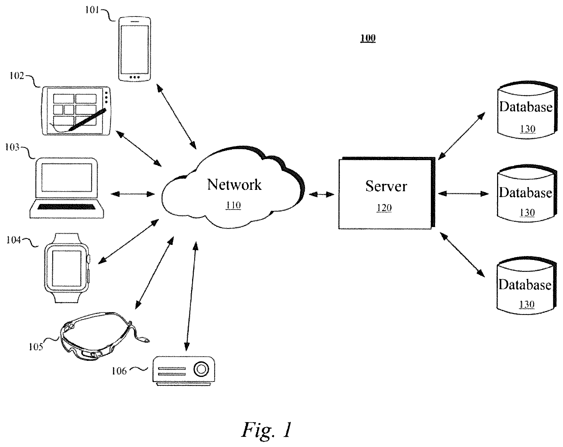

Fig. 1 is a schematic diagram of an exemplary system 100 in which various methods and apparatuses described herein can be implemented according to an embodiment of the present disclosure. Referring to Fig. 1, the system 100 comprises one or more client devices 101, 102, 103, 104, 105, and 106, a server 120, and one or more communication networks 110 that couple the one or more client devices to the server 120. The client devices 101, 102, 103, 104, 105, and 106 may be configured to execute one or more application programs.

In an embodiment of the present disclosure, the server 120 can run one or more services or software applications that enable a data management method as described in the present disclosure to be implemented. For example, the server 120 may run to implement functions of a data management platform. Further, the server 120 may run functions of a cloud platform, such as cloud storage or cloud computing.

In some embodiments, the server 120 may further provide other services or software applications that may comprise a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in Fig. 1, the server 120 may comprise one or more components that implement functions performed by the server 120. These components may comprise software components, hardware components, or a combination thereof that can be executed by one or more processors. A user operating the client device 101, 102, 103, 104, 105, and/or 106 may sequentially use one or more client application programs to interact with the server 120, thereby utilizing the services provided by these components. It should be understood that various system configurations are possible, which may be different from the system 100. Therefore, Fig. 1 is an example of the system for implementing various methods described herein, and is not intended to be limiting.

The user can use the client device 101, 102, 103, 104, 105, and/or 106 to implement the data management method as described in the present disclosure. For example, the user may use the client device to access a service of the data management platform. The user may use the client device to request to store data, read data, execute a task, or obtain an execution result. The client device may provide an interface that enables the user of the client device to interact with the client device. The client device may also output information to the user via the interface. Although Fig. 1 depicts six types of client devices, those skilled in the art will understand that any number of client devices are possible in the present disclosure.

The client device 101, 102, 103, 104, 105, and/or 106 may include various types of computing systems, such as a portable handheld device, a general-purpose computer (such as a personal computer and a laptop computer), a workstation computer, a wearable device, a gaming system, a thin client, various messaging devices, and a sensor or other sensing devices. These computing devices can run various types and versions of software application programs and operating systems, such as Microsoft Windows, Apple iOS, a UNIX-like operating system, and a Linux or Linux-like operating system (e.g., Google Chrome OS); or include various mobile operating systems, such as Microsoft Windows Mobile OS, iOS, Windows Phone, and Android. The portable handheld device may include a cellular phone, a smartphone, a tablet computer, a personal digital assistant (PDA), etc. The wearable device may include a head-mounted display and other devices. The gaming system may include various handheld gaming devices, Internet-enabled gaming devices, etc. The client device can execute various application programs, such as various Internet-related application programs, communication application programs (e.g., email application programs), and short message service (SMS) application programs, and can use various communication protocols.

The network 110 may be any type of network well known to those skilled in the art, and it may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing system in the server 120 can run one or more operating systems including any of the above-mentioned operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may comprise one or more application programs to analyze and merge data feeds and/or event updates received from users of the client devices 101, 102, 103, 104, 105, and 106. The server 120 may further include one or more application programs to display the data feeds and/or real-time events via one or more display devices of the client devices 101, 102, 103, 104, 105, and 106.

The system 100 may further comprise one or more databases 130. In some examples these databases can be used to store data and other information. For example, one or more of the databases 130 can be used to store information such as an audio file and a video file. The databases 130 may reside in various locations. For example, a data repository used by the server 120 may be locally in the server 120, or may be remote from the server 120 and may communicate with the server 120 via a network-based or dedicated connection. The databases 130 may be of different types. In some embodiments, the data repository used by the server 120 may be a database, such as a relational database. One or more of these databases can store, update, and retrieve data from or to the database, in response to a command.

One or more of the databases 130 may also be used by an application program to store application program data. The database used by the application program may be of different types, for example, may be a key-value repository, an object repository, or a regular repository backed by a file system.

The system 100 of Fig. 1 may be configured and operated in various manners, such that the various methods and apparatuses described according to the present disclosure can be applied.

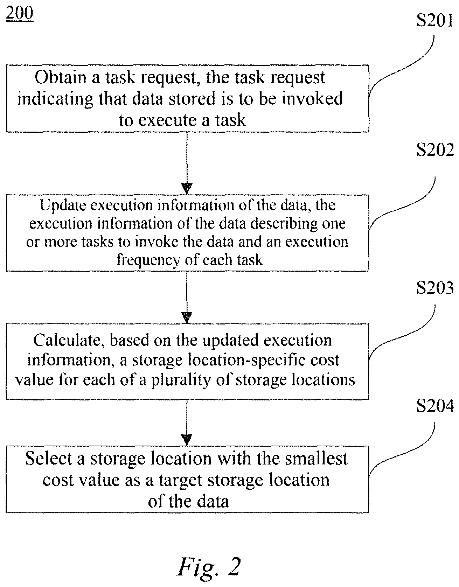

A data management method 200 according to an embodiment of the present disclosure is described below with reference to Fig. 2.

At step S201, a task request is obtained, the task request indicating to retrieve stored data to execute a task. The task request may be a request for executing a task using data stored in a platform or data storage.

At step S202, execution information for the data is updated, the execution information for the data describing one or more tasks that need retrieval of the data and the execution frequency of each of the tasks. The execution information for the data may also be referred to as a current-task list or current-task set for the data, an active-task list or active task set for the data, current retrieval or calling information for the data, or the like.

At step S203, based on the updated execution information and for each of a plurality of storage locations a storage location specific cost value is calculated.

At step S204, according to the calculated cost value, an objective storage location of the data is determined.

According to the foregoing method 200, the execution information, or referred to as the active task set, is maintained for the stored data, the execution information indicating the task to be executed for the data and the task frequency. Execution information of related data is updated when a new task request is received, such that an active status or a use status of the data can be dynamically reflected. The cost value is calculated for different storage types based on the dynamically updated execution information, and a storage location is reselected based on the idea of cost optimization, such that the data storage location can be flexibly and dynamically adjusted, and the execution of the task can be optimized based on a data cost. The objective storage location is a better storage location currently obtained by means of cost optimization, and may also be referred to as a desired storage location, a new storage location, a location to be stored, etc. In addition, it is easy to understand that the calculated objective storage location may be the same as or different from the current storage location of the data.

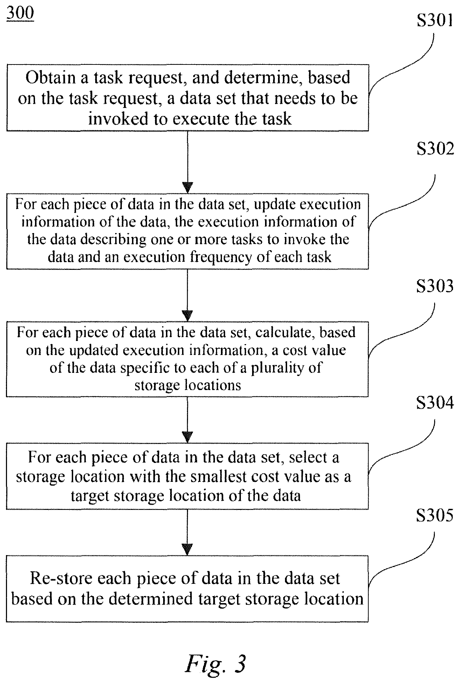

A data management method 300 according to another embodiment of the present disclosure is described below with reference to Fig. 3.

At step S301, a task request is obtained, and a data set that needs to be retrieved to execute the task is determined based on the task request. The data set may contain one or more pieces of data, and the one or more pieces of data in the data set may be stored in the same storage location or different storage locations. For example, a plurality of pieces of data to be retrieved for the same task may be stored in different storage types, or may be stored in different storage platforms provided by different service providers. The data set may be from, for example, a user of a data management platform, such as a user who requests the data management platform to store data. The task request may also be from a user of the data management platform, such as a user who is the same as or different from the data user.

At step S302, for each piece of data in the data set, execution information for the data is updated, the execution information for the data describing one or more tasks that need retrieval of the data and the execution frequency of each of the tasks. Therefore, the execution information for the data may also be referred to as a current-task list or current-task set for the data, an active-task list or active task set for the data, current retrieval or calling information for the data, or the like.

At step S303, for each piece of data in the data set and based on the updated execution information, a cost value of the data that is specific to each of a plurality of storage locations is calculated.

At step S304, for each piece of data in the data set and according to the calculated cost value, an objective storage location of the data is determined.

At step S305, based on the determined objective storage location, each piece of data in the data set is re-stored. For example, if the objective storage location of the data is not the current storage location of the data, the data is re-stored in the objective storage location. If the objective storage location of the data is the current storage location of the data, re-storing means that the current storage location of the data is not to be changed.

The foregoing data management methods 200 and 300 may involve technical fields of data storage and data computing. A user may access the data management platform that can implement the foregoing data management methods 200 and 300, and request the data management platform to access data (in which case the user may be referred to as a "data user") or request the data management platform to execute a task (in which case the user may be referred to as a "program user"). The data management platform is sometimes also referred to as a data sharing platform. On the premise that data privacy is safeguarded, the data sharing platform can provide, based on a frequency of data access, a plurality of data storage solutions, especially an optimal storage solution, by balancing a time cost and a price cost.

Application scenarios of the data sharing platform include but are not limited to enterprise space leasing and video surveillance storage. With a high-performance and large-capacity cloud storage system, a data service operator and an IDC data center can provide convenient and fast leasing services for organizations that cannot purchase a mass storage device separately, to meet the needs of these organizations. In addition, the urban development is accompanied by the wide application of surveillance technologies, which requires a large amount of video line data storage. Integrating the use of cloud storage technologies into a video surveillance system not only provides the system with more interfaces with different functions, but also avoids the installation of management programs and playback software, and even enables linear expansion of capacity, thereby implementing the function of massive data storage. In addition, the use of cloud storage technologies can help distributed management to be better carried out, and is also conducive to expansion at any time. The data sharing platform can also be applied to different industries and their vertical fields, including logistics, operators, financial services, supply chains, etc. In the process of using a cloud data storage platform, joint construction, platform services, and the like can be used to make the solution come true.

The data management platform or the data sharing platform may comprise a public-oriented cloud data storage and cloud computing platform. Therefore, the foregoing methods can be applied to a cloud platform or cloud service scenario. A cloud platform may comprise cloud storage and cloud computing functions. The development of cloud computing technologies and the substantial acceleration of broadband services have provided good technical support for the popularization and development of cloud storage, and the cloud storage mode has gradually gained wide applications for large-capacity, convenient and fast, on-demand storage and access requirements.

However, the existing data management, especially the cloud storage mode, has certain problems in terms of costs. Data storage in the cloud has relatively high network costs, and a large amount of data being stored for a long time often brings about the problem of a large data amount and a low access frequency, which greatly increases the cost of inefficient and useless storage. In addition, in conventional cloud storage, data is stored in a plurality of virtual servers that are usually hosted by a third party, instead of exclusive servers. A hosting company operates a large-scale data center, from which those who need data storage hosting purchase or lease storage space, so as to meet their data storage needs. This storage mode has relatively high costs for infrequently accessed data, and has relatively low security. In view of this, the foregoing methods can overcome the defects that the cost is not calculated based on the storage type and the storage location is not selected based on the cost in the existing cloud service scenario, thereby improving storage efficiency and execution efficiency.

To further perform cost calculation accurately and efficiently, each time a task request for invoking data is received to update the data, task information may also be used to update various types of other information describing the task. According to some embodiments, for each of the one or more tasks, the execution information further describes one or more of the following: a task type, a quantity of time required for the task, and a quantity of resources required for the task. The execution information comprising the information is further maintained while the data is stored, such that the information for calculating the cost of the task that need retrieval of the data can be maintained, especially dynamically maintained. The information is updated each time a new task is received, which helps dynamically calculate an optimal storage location of the data in real time. For example, task types may include a computing task type, a prediction task type, a monitoring task type, an optimization task type, a comparison task type, etc. The quantity of time required for the task may include a task initialization time, a historical execution time, parallel executability, a desired execution time, or may involve other factors that affect the time required for the task. The quantity of time required for the task may further include the urgency of the task or the degree of unacceptability of task execution overtime. The quantity of resources required for the task may include a type of computing node required, an amount of computation required, and an amount of data required. It can be understood that the execution information is not limited thereto, and may comprise other task description information and task execution information, especially information that facilitates the calculation of a data storage cost and execution cost.

According to some embodiments, the plurality of storage locations comprises storage locations of different storage types. The different storage types may comprise at least two of the following: standard storage, low-frequency access storage, archive storage, and cold archive storage. These storage types are distinguished from each other in aspects such as an applicable data access frequency, a storage time, and storage expenses. According to these factors, the storage types are distinguished from each other, so as to optimize the storage location of the data. The standard storage supports frequent data access, and has low latency and high throughput performance. The low-frequency access storage is applicable to data that is infrequently accessed but requires fast access when needed, has the same low latency and high throughput performance as the standard storage, and has high persistence and a low storage cost. The archive storage is applicable to cold data, namely data that is infrequently accessed, and provides an object storage service with high persistence and an extremely low storage cost. The cold archive storage provides high persistence and is applicable to extremely cold data that needs to be stored for a super long time, and in general has the lowest storage expenses among the four storage types. It can be understood that the foregoing four storage types are merely examples. The present disclosure is not limited thereto, and the method described in the present disclosure may be used, for example, to calculate the cost among other storage types and select an optimal storage location, etc. For example, the plurality of storage locations may include storage locations provided by a plurality of storage service providers. The cost calculation may be performed according to different service providers, such that optimal storage of data across the service providers can be provided.

According to some embodiments, updating the execution information for the data comprises: in response to the one or more tasks described in the execution information for the data not comprising said task, adding said task to the execution information. Alternatively, in response to the one or more tasks comprising said task, updating the execution information for the data comprises adjusting the execution frequency of said task in the execution information. A specific manner of updating the execution information is: if there is no current task, adding said task; or if there is the current task, adjusting the frequency. In this way, the frequency of data currently being retrieved can be maintained in real time, making the cost calculation of the data more accurate.

In conventional cloud storage, all data is placed on a server, and the server is present even when no calculation or access is required, making maintenance costs high. In the present disclosure, by means of cost calculation and cost-based storage, storing data in a corresponding storage type can further reduce storage and execution expenses. Costs considered in the present disclosure comprise a storage cost and a calculation cost. According to some embodiments, the cost value of the data is calculated based on both the storage cost and the execution cost. Considering both the storage cost and the execution cost of the data makes the data cost calculation more comprehensive, and the optimal storage location calculated is therefore more valuable. With the solution of the present disclosure, storage can be separated from calculation or execution, the server does not need to be running all the time. Usually, storage expenses need to be paid, and accessing the storage to retrieve data is required when the retrieved data is to be calculated. According to some embodiments, determining the objective storage location of the data according to the calculated cost value comprises selecting a storage location with the smallest cost value as the objective storage location of the data. Selecting the location with the smallest cost value as the objective storage location of the data can minimize the costs during data storage and execution, reduce expenses for the user, and improve the operating efficiency. It can be understood that the present disclosure is not limited thereto. For example, a location with a cost value being lower than a threshold may be considered as the objective storage location. If there are a plurality of locations with cost values being lower than the threshold, a location in which the data will be stored may be selected from them with reference to other criteria. As an example, the other criteria herein may be minimizing data movement, choosing standard storage as much as possible, choosing storage with the lowest unit price as possible, choosing a storage location with the highest access performance as possible, or other criteria specified by the user.

To shorten execution time, data transfer can be reduced based on a graph partitioning algorithm. In addition, data dependency between different operations can be used to reduce time and money costs in transferring data. However, such a method does not consider placing the data in different types of storage areas (for example, different storage types on the cloud). Also, a conventional storage optimization solution does not consider the use of a cost weighting function for a plurality of targets to generate a Pareto optimal solution, and does not consider the cost of storing data on the cloud. In addition, a solution that uses a load balancing algorithm or a dynamic pre-configuration algorithm to generate the best pre-configuration planned cost does not consider types of data storage on the cloud. Different storage modes of a data platform will affect the money cost and time cost of using this data to execute this task, while the money cost and time cost both are of great concern to the user. In the present disclosure, according to some embodiments, the cost value is calculated based on both the time cost and the price cost. Considering both the time cost and the price cost in the present disclosure makes the data cost calculation more comprehensive, and the optimal storage location calculated is therefore more valuable.

For the time cost, a time Time(j,t) required for a task specific to a storage location may be considered, where j denotes the task, t denotes specific storage, and the time Time(j,t) required for the task may be calculated by, for example, the following formula:

$$\text{Time(j,t)=InitializationTime(j)+DataTransferTime(j,t)+ExecutionTime(j)}$$

where InitializationTime(j) is an initialization time of the task j, DataTransferTime(j,t) is a data transfer time of the task j specific to the storage mode t, and ExecutionTime(j) is an execution time of the task. The initialization time, the data transfer time, and the execution time may be predicted based on historical data or historical performance. Alternatively, the initialization time and the data transfer time may be calculated according to a task amount, an average initialization time, the storage mode, or a storage time. The execution time may be calculated according to Amdahl's law based on a proportion of tasks that can be parallelized in the tasks, the number of nodes that can undertake parallel computing, and the like.

According to some embodiments, the time cost of the data is calculated based on a required time and a desired time of each of the one or more tasks. By comparing the time required for the task with the desired time, for example, by using a standardized time cost, time consumption of the task can be more clearly reflected.

For example, the time cost can be defined as the following standardized required time:

$$\text{Time}_n(j,t) = \frac{\text{Time}(j,t)}{DesiredTime}$$

where Time($j$, $t$) is the time required for the task, and *DesiredTime* is the desired time. The desired time is, for example, a value that corresponds to the corresponding task and that is set by the user, for example, the user expects that the task should be completed within 1 minute. The desired time may alternatively be preset, set in batches, or set by default based on task types or similar tasks.

According to some embodiments, the time cost of the data is calculated based on a required time, a desired time, and a penalty value of each of the one or more tasks. The penalty value represents unacceptability of task execution overtime. Additionally considering the penalty value can reflect the strictness for overtime of a specific task. For example, for a task with a very strict time requirement, a high penalty value may be set; and for a task with a less strict requirement, a lower penalty value may be set. The calculated cost therefore can lead to the proper use of resources, which facilitates the efficient and expected execution of the task.

For example, with the penalty value additionally considered, the time cost may be defined as follows:

$$\text{Time}_n(j,t) = \frac{\text{Time}(j,t)}{DesiredTime} + Penalty$$

where *Time(j,t)* is the required time, and *DesiredTime* is the desired time. *Penalty* is the penalty value, which may also be referred to as an additional time. The penalty value is added when the required time is greater than the desired time. For example, the penalty value may be represented by a step function, and when the required time is greater than the desired time, the set value is presented, and when the required time is less than or equal to the desired time, the penalty value is zero. Alternatively, a penalty function may be represented by, for example, a sigmoid function, and the present disclosure is not limited thereto. The size of *Penalty* may be used to represent the strictness of the requirement for the task not to time out. For example, for a task with a high time requirement, a very high penalty value (for example, 10, 100, or 10000) may be set. For a task with no time requirement, no penalty value is set, or the penalty value is set to zero or a very small number (for example, 0.1 or 0.5). Alternatively, a moderate penalty value such as 3, 5, or 8 may be set. It will be easily understood by those skilled in the art that the above penalty values are merely examples.

According to some embodiments, the price cost of the data is calculated based on a service price and a desired price of each of the one or more tasks. With both the service price and the desired price, for example, by calculating a standardized price cost, money consumption or a price of the task can be more clearly reflected.

For example, the price cost can be defined as the following standardized service price:

$$\text{Money}_n(j,t) = \frac{\text{Money}(j,t)}{DesiredMoney}$$

where *Money(j,t)* is a price for leasing virtual machines to perform calculation, storage, data access, etc. specific to the task j that needs retrieval of the data in data storage specific to the storage mode or the storage location t, and the price is referred to as the service price herein. *DesiredMoney* denotes the desired price, which is, for example, a price specified by the user, or may be an expected value uniformly assigned according to task types, similar tasks, etc.

The service price considers the price of the entire leasing service. For example, the service price may comprise at least one or a combination of a task execution price, a data storage price, and a data obtaining price. According to some embodiments, the service price is a sum or weighted sum of the task execution price, the data storage price, and the data obtaining price. For example, the service price Money(j,t) may be calculated by using the following formula, where j denotes the task and t denotes the storage mode or the storage location:

$$\text{Money}(j,t) = \text{ExecutionMoney}(j,t) + \text{DataStorageMoney}(j,t) + \text{DataAccessMoney}(j,t)$$

where ExecutionMoney(j,t) denotes the execution price, DataStorageMoney(j,t) denotes the data storage cost, and DataAccessMoney(j,t) denotes the data obtaining cost.

The execution price may be calculated based on a unit price of a computing node, a quantity of computing nodes, a time unit, and the initialization time. For example, ExecutionMoney(j,t) may be defined as the following formula:

$$\text{ExecutionMoney}(j,t) = \text{VMPrice}(j) * n \\ * \left\lceil \frac{\text{Time}(j,t) - \text{InitializationTime}(j)}{TimeQuantum} \right\rceil$$

where VMPrice(j) is a leasing price or amount of the computing node such as a virtual machine required to execute the task, n is a quantity of computing nodes required to complete the task, *Time(j,t)* may be the required time of the task as calculated above, and InitializationTime(j) may be the initialization time as calculated above. *TimeQuantum* is a time unit, and thereby the execution price per unit time is calculated.

The data storage cost may be calculated according to a workload, a data amount, a data storage mode, etc. For example, DataStorageMoney(j,t) may be defined as the following formula:

$$\text{DataStorageMoney}(j,t) = \\ \left( \sum_{i \in \text{dataset}(j)} [(\text{workload}(j) * f(j)) * \frac{\text{StoragePrice}(t) * \text{size}(i)}{\sum_{k \in \text{job}(i)} \text{workload}(k) * f(k)} ] \right) / f(j)$$

where

i denotes data in a data set dataset retrieved by the current task j;
workload(j) is a workload of the task j, f(j) is the execution frequency of said task j, and the product of the two represents a workload of the task j per unit time; StoragePrice(t) is a storage price, e.g., a storage unit price, of the storage mode t, size(i) is a data amount of the current data i, and the product of the two represents a storage price required for the data i;

job(i) denotes execution information or an active task set of the current data i, and k is a task in the active task set job(i) of i; workload(k) is a workload of the task k, f(k) is the execution frequency of said task k, and the product of workload(k) and f(k) represents a workload of the task k per unit time; and a sum of k represents a total workload per unit time of all tasks that retrieve the data i. Then, $(\mathrm{workload}(j) * \mathrm{f}(j)) / \sum_{k \in \mathrm{job}(i)} \mathrm{workload}(k) * \mathrm{f}(k)$ can reflect a proportion of the workload of the current task to the total workload for the data i. Therefore, by using the proportion as a coefficient, a share of the storage price required for the data i that is contributed by the current task j can be obtained; and

the summation symbol $\sum_{i \in \mathrm{dataset}(j)}$ represents summing up all the data in the data set retrieved by the task j to calculate the cost of storing all the data required by the task j.

The data obtaining cost may be calculated according to an obtaining cost per time and a quantity. For example, DataAccessMoney(j,t) may be defined as the following formula:

$$\mathrm{DataAccessMoney}(j, t) = \mathrm{ReadPrice}(t) * \mathrm{size}(j)$$

where ReadPrice(t) is a read unit price of the storage mode t, and size(j) is a read amount required for the task j.

According to some embodiments, calculating the cost value comprises calculating a sum or weighted sum of the time cost and the price cost. The sum or weighted sum of the time cost and the price cost is used to represent the total cost of the data, which can fully reflect the cost of the data with simple calculation. For example, the cost value of executing the task per unit time may be defined as the following formula:

$$\mathrm{Cost}(j, t) = \left( \omega_t * \mathrm{Time}_n(j, t) + \omega_m * \mathrm{Money}_n(j, t) \right) * \mathrm{f}(j)$$

where $\omega_t$ and $\omega_m$ are importance of the time cost and importance of the price cost that are set manually, and f(j) is a data storage frequency.

According to some embodiments, the method according to the present disclosure, such as the method 200 or the method 300, further comprises executing the task, wherein the method further comprises: in response to a current storage location of the data being not the objective storage location, re-storing the data before the execution of the task, or in parallel with the execution of the task, or after the execution of the task. The order of re-storing the data and executing the task is not limited, and the data may be re-stored at any appropriate time, thereby realizing flexible data re-storage and optimization.

According to some embodiments, the method further comprises: after the execution of the task, storing execution result data in a random storage location or a default storage location. For example, the default storage location may be a standard storage location, a storage location with the lowest storage unit price, or a storage location with the lowest cost value. New data generated each time may be stored in a random storage or default storage manner without calculation, and a storage location of the data is updated when the data is retrieved by a task, such that the calculation process can be simplified, and unnecessary calculation can be reduced.

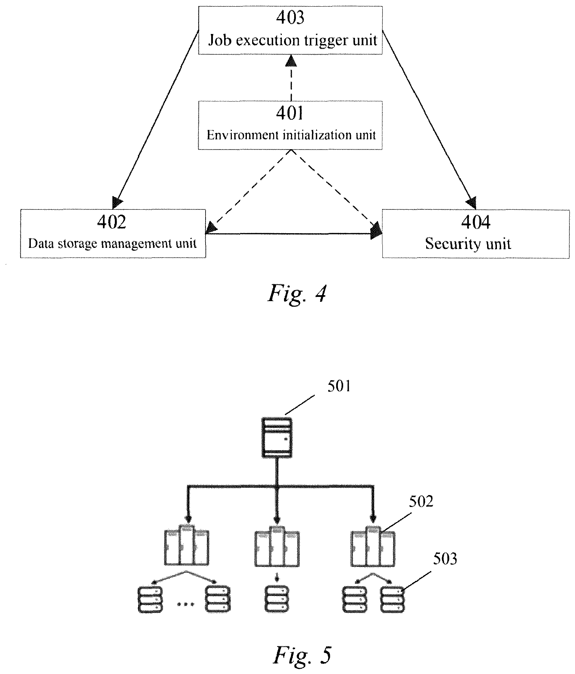

Fig. 4 shows functional modules of a data management platform 400 that can be used to implement the method described in the present disclosure. The data management platform 400 may comprise an environment initialization unit 401, a data storage management unit 402, a job execution trigger unit 403, and a security unit 404. The environment initialization unit 401 first creates an account and an execution space of a user. The execution space is connected to an intranet, which can fully ensure security. The data storage management unit 402 will create a storage space with a corresponding permission for each account, wherein each storage space has its own unique AK and SK, which can ensure its security. According to some embodiments, a task request is from a first user, and data belongs to a second user different from the first user. The data management platform enables a user to access data of another user, thereby implementing the circulation of data and programs between users on the platform.

Fig. 5 depicts an example underlying hardware architecture diagram. As shown in Fig. 5, a user can connect to the platform via an orchestrator node 501. The data management platform creates a cluster 502 each time when accepting a new user request/requirement to execute a task, and each cluster has one or more computing nodes 503. The plurality of computing nodes 503 may be initialized at the same time, and task execution between different computing nodes can be controlled by the orchestrator node 501. The orchestrator node 501, the cluster 502, and the computing node 503 are located in an isolated domain. The orchestrator node 501 has an interface (not shown) that can be accessed from an external network, that is, the user side, while each computing node is not connected to a public network, thereby ensuring data sharing and computing security. By using the orchestrator node, it is possible to perform a computable but invisible operation on multi-party data in the isolated domain. The functional units 401 to 404 may all be considered to be present on the orchestrator node. Therefore, the units 401 to 404 are present in the isolated domain. The job execution trigger unit 403 is responsible for executing a task on a cluster.

Data to be executed is initially encrypted and stored in a data storage portion (not shown), for example, may be scattered in different storage types and different storage locations of the data storage portion. According to some embodiments, the data is stored in the isolated domain, and executing the task comprises: creating a copy of the data, and using the created copy to execute the task. In other words, the data storage portion is also located in the isolated domain and can be accessed in the isolated domain. When the data storage portion is to be accessed from the external network, the data storage portion may be accessed, for example, via the orchestrator node with an account and a password. By storing the data in the isolated domain, the ownership still belongs to a data provider, while a data user can perform operations that are available but invisible, and computable but non-replicable. In this way, security and privacy of data for serving large-scale public utilities are reliably protected, and also the cost of data storage is maintained at a reasonable level. The data management platform can implement a multi-task and multi-target execution manner, while providing multi-dimensional security protection. After receiving an invocation request, the data storage management unit 402 reads the request to the platform. The security unit 404 may perform a decryption operation on the request.

After the execution of the task, the security unit 404 may also perform an encryption operation on the data generated from the execution, and the data is stored into the data storage portion by the data storage management unit 402. After the execution ends, the cluster is released.

The present disclosure can overcome the defect of low security in the existing data management and data storage scenarios. In the prior art, in respect of security, issues such as internal and external administrative permissions, a supplier accessing a user's file for marketing and encryption, intellectual property confidentiality, and transmission and synchronization on Wi-Fi will all have some degree of impact on data privacy. Therefore, in addition to the proper storage of data, the present disclosure further provides a security mechanism for the isolated domain, such that when data is shared between a plurality of different users, the data can be used in an "available but invisible" manner, thereby ensuring data security. The present disclosure may also be applicable to cloud platform and cloud service scenarios.

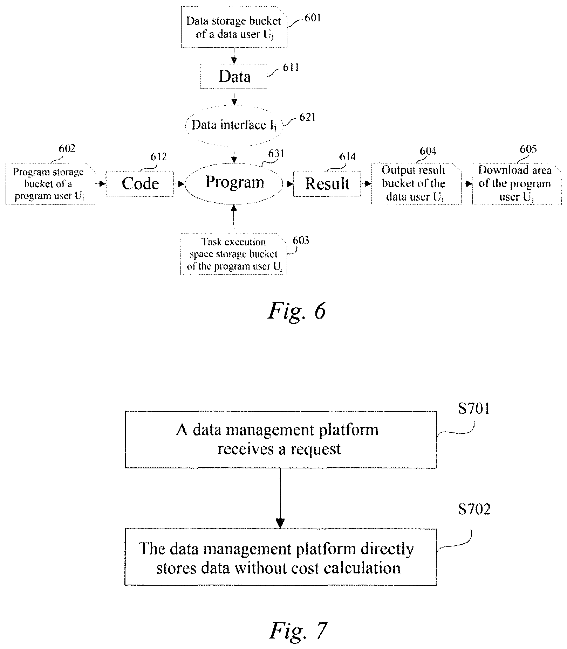

A workflow on a data management platform is described below with reference to Fig. 6 and in conjunction with an account cycle and an execution cycle.

In a cycle of an account, the data management platform creates a multi-terminal account, performs data processing, and sanitizes the account. Details of data sharing and processing are as follows. It is assumed herein that a user $U_i$ is a data user, that is, a user who requests the data management platform to access data, and a user $U_j$ is a program user, that is, a user who requests the data management platform to use an execution task of the user $U_i$. As shown in Fig. 6, the user U, has its data storage bucket 601, and data 611 therein is taken as an example of data to be retrieved. The user $U_j$ has its program storage bucket 602 and code 612 therein is taken as an example of code to be requested for execution. The user $U_j$ further has a task execution space storage bucket 603. Before the execution of the task, the user $U_i$ makes a data request to the user $U_j$. After the approve of the user $U_i$, the user $U_j$ obtains dummy data of the original data 611 through the data interface 621, and the dummy data allows the user $U_j$ to test its execution task file. In the task execution cycle, after initialization, the data management platform synchronizes the data, and executes the task before the end of synchronization. Data synchronization means that the data storage management unit synchronizes cloud data or the data interface, and transfers an execution file script to the execution space. A program 631 is taken as an example of task execution, and generates result data 614. The result data 614 is stored in an output result bucket 604 of the user $U_i$. Subsequently, when wanting to read the result data, the program user downloads it to a download area 605 of the program user.

Although one data user and one program user are shown herein, it can be understood that the program user $U_j$ can simultaneously use data of a plurality of users/tenants, process the data, and download results; the data of the data user $U_i$ may be used by the plurality of users/tenants; and the present invention is not limited thereto.

Fig. 7 shows method steps on the data user side. The steps are performed when a data user wants to store data on a data management platform.

At step S701, the data management platform receives a request.

At step S702, the data management platform directly stores data without cost calculation, for example, stores the data in the cloud, in an isolated domain, or in other storage locations. Direct storage may be standard storage or storage with the lowest unit price.

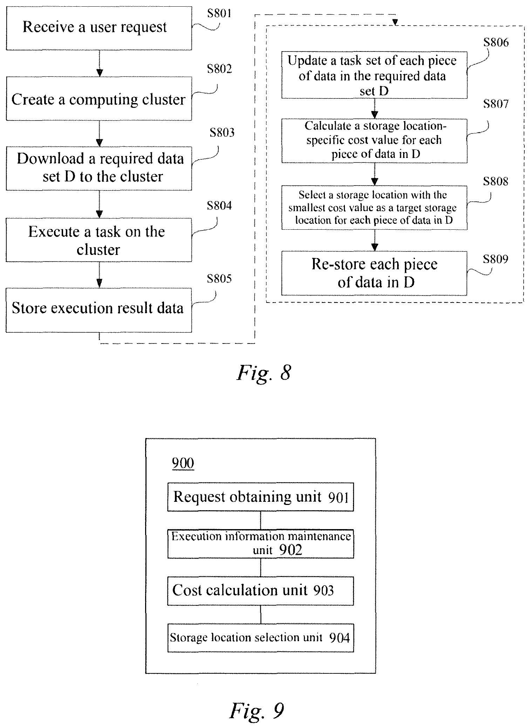

Fig. 8 shows method steps on the program user side. A program user requests to execute data, especially data shared by other users, via a data management platform.

At step S801, a user request is received. For example, an orchestrator node, specifically a data management platform on the orchestrator node, receives a request for a task to be executed by a user. For example, the request is for executing a task $j_{new}$.

At step S802, a computing cluster is created. For example, an environment initialization module of the data management platform creates the computing cluster on an isolated domain.

At step S803, required data is downloaded to the cluster. The required data is denoted as $D=\{d_1,d_2,d_3...d_n\}$. Optionally, encrypted data may be decrypted for execution. For example, a data storage management unit may download the required data from a cloud data storage portion to the cluster. A security unit may perform decryption.

At step S804, a task or job is executed on the cluster. For example, this step may be performed by a job execution trigger unit module. For the execution of the task on the cluster, the decrypted data in the previous step may be used, and the execution of $j_{new}$ is specific to the request of the user.

At step S805, execution result data is stored. Optionally, the execution result may be encrypted, for example, by a security unit. The result data (for example, encrypted) may be stored by the data storage management unit, for example, stored in the cloud. This can be direct storage without cost calculation, such as standard storage or storage with the lowest cost.

In addition, according to the present disclosure, in each process of steps S801 to S805, cost calculation and re-storage based on an optimal cost may be further performed on data set D retrieved this time.

For each piece of data $d_i$ (i=1, 2, 3, ..., n) in D, the system has maintained a corresponding task set $J_i$. For example, for data d1, there may be M tasks $j_{1k}$ in a task set $J_1$: "a task $j_{11}$, which runs once a day, a task $j_{12}$, which runs twice a day, ..., a task $j_{1M}$, which runs once an hour". Tasks of the same type may be classified, so that each task $j_{1k}$ may represent different types of tasks, such as an average calculation task type and a data prediction task type. Different types of tasks therefore have different execution costs.

Therefore, there are the following steps S806 to S809. It should be noted that although the steps herein are numbered S806 to S809, they can exist between the foregoing steps S801 to S805, and are performed once each time a new user task request is received, but the execution order thereof is not limited. For example, the steps may be performed before the execution of the task, or after the execution of the task, or in parallel with the task. For example, the sequence of S801 to S805 and then S806 to S809 may be used, the sequence of S801, S806 to S809, and S802 to S805 may be used, the sequence of S801 and S802, S806, S803, S807 to S809, and then S804 and S805 may be used, and so on. Those skilled in the art can understand that the foregoing description is merely an example, as long as it is ensured that S801 is the first step, there is a time sequence between S801 to S805, and there is a time sequence between S806 to S809; and steps in both S802 to S805 and S806 to S809 may be parallel.

At step S806, a task set corresponding to each piece of data in the data set D to be retrieved is updated. That is, the task set corresponding to each piece of data in D is updated according to the current task $j_{new}$. Specifically, if the task $j_{new}$ is not present in the original task set, the new task is added. If the task $j_{new}$ is present in the original task set, a frequency of the task may be adjusted. For example, task sets may be combined based on a new task request, or if the user request this time is to reduce a task execution frequency, a task frequency parameter in the task set may be reduced. Therefore, an updated task set is obtained for each piece of data $d_i$ (i=1, 2, 3, ..., n ) in D, and is still referred to as $J_i$.

At step S807, a storage location specific cost value is calculated for each piece of data in D. The cost is calculated for each piece of data $d_i$ in D and storage locations with different costs, such as different storage types, e.g., one of the four storage types. It can be understood that the storage type herein is not limited to the storage type mentioned above, and the method of the present disclosure is applicable to calculation and data optimization between any storage locations with different costs.

Herein, a cost parameter cost(j,t) is calculated for each task $j_{ik}$ in $J_i$ and each storage type t. Then, these cost parameters are summed up according to different t, to obtain cost values in different storage types for the data $d_i$ and the task set $J_i$ to be executed, including a storage cost and an execution cost. A total price model for executing a specific quantity of files in a specific data storage mode is as follows:

$$\mathrm{Cost}\,(Jobs, Plan) = \sum_{j \in Jobs} \mathrm{Cost}(j, t)$$

A price model for executing a task per unit time is as follows:

$$\mathrm{Cost}\,(j, t) = \left(\omega_t * \mathrm{Time}_n(j, t) + \omega_m * \mathrm{Money}_n(j, t)\right) * f(j)$$

where $\mathrm{Time}_n(j,t)$ and $\mathrm{Money}_n(j,t)$ denote a standardized time cost and price cost in a specific storage mode (*t*) and a specific task (*j*), $\omega_t$ and $\omega_m$ are manually set importance of the time cost and price cost, f(*j*) is a data storage frequency, and $\mathrm{Time}_n(j,t)$ and $\mathrm{Money}_n(j,t)$ each may be defined by using the method 200 or the method 300 in the foregoing description. Alternatively, $\mathrm{Time}_n(j,t)$ and $\mathrm{Money}_n(j,t)$ each may use other calculation methods for calculating a time cost and a price cost that can be figured out by those skilled in the art, and the present disclosure is not limited thereto.

At step S808, a storage location with the smallest cost value is selected as an objective storage location for each piece of data $d_i$ in D. A greedy algorithm may be used herein to calculate the minimum cost, wherein an input to the algorithm may comprise: the data D; the task set $J_i$ corresponding to each piece of data $d_i$ in D; the storage mode t; and a storage mode set StorageTypeList. An output from the algorithm may comprise a storage mode $S_i$ of each piece of data $d_i$ in D; and a cost $Cost\_min_i$ of each piece of data $d_i$ in D. For example, it can be determined by means of calculation that data $d_1$ is suitable for storage in a cold archive storage area, and data $d_2$ is suitable for a standard storage area, and so on, and the present disclosure is not limited thereto. The process of using the greedy algorithm to calculate the minimum cost is triggered once each time a new user task request is received, and the calculation is performed for all historical task sets or active task sets of the data.

At step S809, each piece of $d_i$ in D is re-stored in the cloud according to the calculated storage type. For example, in response to the current storage location of the data being not the objective storage location, the data is re-stored. As described above, the step of re-storing the data may occur before the execution of the task, or in parallel with the execution of the task, or after the execution of the task. The order of re-storing the data and executing the task is not limited, and the data may be re-stored at any appropriate time, thereby realizing flexible data re-storage and optimization.

The cost calculation and re-storage of the data may be in accordance with the multi-target data storage mode of the present disclosure as described above. For example, the greedy algorithm may be used to comprehensively minimize data storage costs and execution time, so as to select an appropriate data storage mode. A price of frequently used data in the data management platform is higher.

A data management system 900 according to an embodiment of the present disclosure is described with reference to Fig. 9. The data management system 900 comprises a request obtaining unit 901, an execution information maintenance unit 902, a cost calculation unit 903, and a storage location selection unit 904. The request obtaining unit 901 is configured to obtain a task request, the task request indicating to retrieve stored data to execute a task. The execution information maintenance unit 902 is configured to update execution information for the data, the execution information for the data describing one or more tasks that need retrieval of the data and the execution frequency of each of the tasks. The cost calculation unit 903 is configured to calculate, based on the updated execution information for the data and for each of a plurality of storage locations, a storage location specific cost value of the data. The storage location selection unit 904 is configured to determine an objective storage location of the data according to the calculated cost value. By using the foregoing data management system, the data storage location can be flexibly and dynamically adjusted, and task execution can be optimized based on the data cost.

According to another aspect of the present disclosure, there is further provided a computing device, which may comprise: a processor; and a memory that stores a program, the program comprising instructions that, when executed by the processor, cause the processor to perform the foregoing data management method.

According to still another aspect of the present disclosure, there is further provided a computer-readable storage medium storing a program, wherein the program may comprise instructions that, when executed by a processor of a server, cause the server to perform the foregoing data management method.

According to still another aspect of the present disclosure, there is further provided a computer program product, comprising computer instructions, wherein when the computer instructions are executed by a processor, the foregoing data management method is implemented.

According to still another aspect of the present disclosure, there is further provided a cloud platform. The cloud platform can use the foregoing data management method to manage stored data . The cloud platform can provide a data user with data access and provide a program user with task computing as described in the embodiments of the present disclosure.

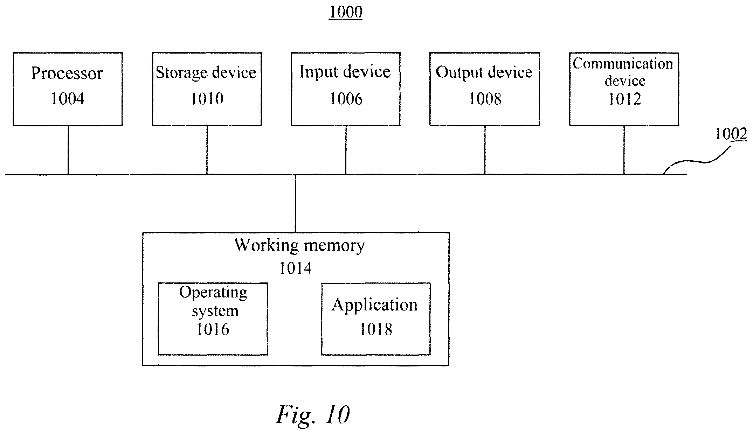

Referring to Fig. 10, a structural block diagram of a computing device 1000 that can serve as a server or a client of the present disclosure is now described, which is an example of a hardware device that can be applied to various aspects of the present disclosure.

The computing device 1000 may comprise elements in connection with a bus 1002 or in communication with a bus 1002 (possibly via one or more interfaces). For example, the computing device 1000 may comprise the bus 1002, one or more processors 1004, one or more input devices 1006, and one or more output devices 1008. The one or more processors 1004 may be any type of processors and may include, but are not limited to, one or more general-purpose processors and/or one or more dedicated processors (e.g., special processing chips). The processor 1004 may process instructions executed in the computing device 1000, comprising instructions stored in or on the memory to display graphical information of a GUI on an external input/output apparatus (such as a display device coupled to an interface). In other implementations, if required, the plurality of processors and/or a plurality of buses can be used together with a plurality of memories. Similarly, a plurality of computing devices can be connected, and each device provides some of the operations (for example, as a server array, a group of blade servers, or a multi-processor system). In Fig. 10, there being one processor 1004 is taken as an example.

The input device 1006 may be any type of device capable of inputting information to the computing device 1000. The input device 1006 can receive entered digit or character information, and generate a key signal input related to user settings and/or function control of the computing device for data management, and may include, but is not limited to, a mouse, a keyboard, a touchscreen, a trackpad, a trackball, a joystick, a microphone, and/or a remote controller. The output device 1008 may be any type of device capable of presenting information, and may include, but is not limited to, a display, a speaker, a video/audio output terminal, a vibrator, and/or a printer.

The computing device 1000 may also include a non-transitory storage device 1010 or be connected to a non-transitory storage device 1010. The non-transitory storage device may be non-transitory and may be any storage device capable of implementing data storage, and may include, but is not limited to, a disk drive, an optical storage device, a solid-state memory, a floppy disk, a flexible disk, a hard disk, a magnetic tape, or any other magnetic medium, an optical disc or any other optical medium, a read-only memory (ROM), a random access memory (RAM), a cache memory and/or any other memory chip or cartridge, and/or any other medium from which a computer can read data, instructions and/or code. The non-transitory storage device 1010 can be removed from an interface. The non-transitory storage device 1010 may have data/programs (including instructions)/code/modules (for example, the request obtaining unit 901, the execution information maintenance unit 902, the cost calculation unit 903, and the storage location selection unit 904 that are shown in Fig. 9) for implementing the foregoing methods and steps.

The computing device 1000 may further comprise a communication device 1012. The communication device 1012 may be any type of device or system that enables communication with an external device and/or network, and may include, but is not limited to, a modem, a network interface card, an infrared communication device, a wireless communication device and/or a chipset, e.g., a Bluetooth™ device, a 1302.11 device, a Wi-Fi device, a WiMax device, a cellular communication device and/or the like.

The computing device 1000 may further comprise a working memory 1014, which may be any type of working memory that stores programs (including instructions) and/or data useful to the working of the processor 1004, and may include, but is not limited to, a random access memory and/or a read-only memory.

Software elements (programs) may be located in the working memory 1014, and may include, but is not limited to, an operating system 1016, one or more application programs 1018, drivers, and/or other data and code. The instructions for performing the foregoing methods and steps may be comprised in the one or more application programs 1018, and the foregoing method can be implemented by the processor 1004 reading and executing the instructions of the one or more application programs 1018. The executable code or source code of the instructions of the software elements (programs) may also be downloaded from a remote location.

It should further be appreciated that various variations may be made according to specific requirements. For example, tailored hardware may also be used, and/or specific elements may be implemented in hardware, software, firmware, middleware, microcode, hardware description languages, or any combination thereof. For example, some or all of the disclosed methods and devices may be implemented by programming hardware (for example, a programmable logic circuit including a field programmable gate array (FPGA) and/or a programmable logic array (PLA)) in an assembly language or a hardware programming language (such as VERILOG, VHDL, and C++) by using the logic and algorithm in accordance with the present disclosure.

It should further be understood that the foregoing methods may be implemented in a server-client mode. For example, the client may receive data input by a user and send the data to the server. Alternatively, the client may receive data input by the user, perform a part of processing in the foregoing method, and send data obtained after the processing to the server. The server may receive the data from the client, perform the foregoing method or another part of the foregoing method, and return an execution result to the client. The client may receive the execution result of the method from the server, and may present same to the user, for example, through an output device. The client and the server are generally far away from each other and usually interact through a communications network. A relationship between the client and the server is generated by computer programs running on respective computing devices and having a client-server relationship with each other. The server may be a server in a distributed system, or a server combined with a blockchain. The server may alternatively be a cloud server, or an intelligent cloud computing server or intelligent cloud host with artificial intelligence technologies.

It should further be understood that the components of the computing device 1000 can be distributed over a network. For example, some processing may be executed by one processor while other processing may be executed by another processor away from the one processor. Other components of the computing device 1000 may also be similarly distributed. As such, the computing device 1000 can be interpreted as a distributed computing system that performs processing at a plurality of locations.

Although the embodiments or examples of the present disclosure have been described with reference to the drawings, it should be understood that the methods, systems and devices described above are merely exemplary embodiments or examples, and the scope of the present invention is not limited by the embodiments or examples, and is only defined by the scope of the granted claims. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A computer-implemented method for data management, comprising:

   obtaining (S201), by at least one processor, a task request, the task request indicating to retrieve data stored on at least one storage device to execute a task;
   updating (S202) execution information for the data by the at least one processor and based on the task request, the execution information for the data describing a task set of one or more tasks that need retrieval of the data, wherein the execution information comprises an execution frequency of each of the one or more tasks, wherein updating the execution information for the data comprises:

   in response to determining that said task is not comprised in the task set, adding said task to the task set so that the execution frequency of said task is comprised in the updated execution information; or
   in response to determining that said task is comprised in the task set, adjusting the execution frequency of said task in the execution information based on the task request;

   calculating (S203), by the at least one processor and based on the updated execution information for the data and for each of a plurality of storage locations on the at least one storage device, a storage location specific cost value of the data;
   determining (S204), by the at least one processor and based on the calculated cost value, an objective storage location on the at least one storage device for storing said data; and
   executing said task;
   wherein the method further comprises in response to a current storage location of the data being not the objective storage location, re-storing the data on the objective storage location before the execution of the task, in parallel with the execution of the task, or after the execution of the task,
   wherein the cost value is calculated based on both a time cost and a price cost, and wherein the time cost of the data is calculated based on a required time, a desired time, and a penalty value of each of the one or more tasks, the penalty value representing a degree of unacceptability of task execution overtime of the one or more tasks.

2. The method according to claim 1, wherein the plurality of storage locations comprises storage locations of different storage types, and the different storage types comprise at least two of the following: standard storage, low-frequency access storage, archive storage, and cold archive storage.

3. The method according to any one of claims 1 to 2, wherein the cost value is calculated based on both a cost for storage and a cost for execution.

4. The method according to any one of claims 1 to 3, wherein calculating the cost value comprises calculating a sum or weighted sum of the time cost and the price cost.

5. The method according to any one of claims 1-3, wherein the price cost of the data is calculated based on a service price and a desired price of each of the one or more tasks, and optionally,
   wherein the service price is a sum or weighted sum of a task execution price, a data storage price, and a data obtaining price.

6. The method according to any one of claims 1 to 5, wherein for each of the one or more tasks, the execution information further describes one or more of the following: a task type, a quantity of time required for the task, and a quantity of resources required for the task.

7. The method according to any one of claims 1 to 6, further comprising after the execution of the task, storing the execution result in a random storage location or a default storage location.

8. The method according to claim 7, wherein the data is stored in an isolated domain, and wherein executing the task comprises: creating a copy for said data, and using the created copy to execute the task.

9. The method according to any one of claims 1 to 8, wherein the task request is from a first user, and the data belongs to a second user different from the first user.

**10.** The method according to any one of claims 1 to 9, wherein the determining an target storage location of the data according to the calculated cost value comprises:
selecting a storage location with the smallest cost value as the target storage location of the data.

**11.** A data management system, comprising:

a request obtaining unit (901) to obtain a task request, the task request indicating to retrieve data stored on at least one storage device to execute a task;
an execution information maintenance unit (902) to update execution information for the data based on the task request, the execution information for the data describing a task set of one or more tasks that need retrieval of the data, wherein the execution information comprises the execution frequency of each of the one or more tasks, wherein updating the execution information for the data comprises: in response to determining that said task is not comprised in the task set, adding said task to the task set so that the execution frequency of said task is comprised in the updated execution information; or in response to determining that said task is comprised in the task set, adjusting the execution frequency of said task in the execution information based on the task request;
a cost calculation unit (903) to calculate, based on the updated execution information for the data and for each of a plurality of storage locations on the at least one storage device, a storage location specific cost value of the data; and
a storage location selection unit (904) to determine, based on the calculated cost value, an objective storage location on the at least one storage device for storing the data,
wherein the cost value is calculated based on both a time cost and a price cost, and wherein the time cost of the data is calculated based on a required time, a desired time, and a penalty value of each of the one or more tasks, the penalty value representing a degree of unacceptability of task execution overtime of the one or more tasks, and
wherein the data management system further comprises unit for:

executing said task; and
in response to a current storage location of the data being not the objective storage location, re-storing the data on the objective storage location before the execution of the task, in parallel with the execution of the task, or after the execution of the task.

**12.** A non-transient computer-readable storage medium that stores a program, the program comprising instructions that, when executed by a processor of an electronic device, instruct the electronic device to perform the method according to any one of claims 1 to 10.

**13.** A computer program product, comprising computer instructions that upon being executed by a processor, cause to implement the method according to any one of claims 1 to 10.

**Patentansprüche**

**1.** Computerimplementiertes Verfahren zum Datenmanagement, umfassend:

das Erhalten (S201), durch mindestens einen Prozessor, einer Aufgabenanforderung, wobei die Aufgabenanforderung angibt, Daten abzurufen, die auf mindestens einer Speichervorrichtung gespeichert sind, um eine Aufgabe auszuführen;
das Aktualisieren (S202) von Ausführungsinformationen für die Daten durch den mindestens einen Prozessor und auf der Grundlage der Aufgabenanforderung, wobei die Ausführungsinformationen für die Daten einen Aufgabensatz von einer oder mehreren Aufgaben beschreiben, die eine Abfrage der Daten benötigen, wobei die Ausführungsinformationen eine Ausführungshäufigkeit von jeder der einen oder mehreren Aufgaben umfassen, wobei das Aktualisieren der Ausführungsinformationen für die Daten umfasst:

in Reaktion auf das Bestimmen, dass die Aufgabe nicht in dem Aufgabensatz enthalten ist, das Hinzufügen der Aufgabe zu dem Aufgabensatz, so dass die Ausführungshäufigkeit der Aufgabe in den aktualisierten Ausführungsinformationen enthalten ist; oder
in Reaktion auf das Bestimmen, dass die Aufgabe in dem Aufgabensatz enthalten ist, das Einstellen der Ausführungshäufigkeit der Aufgabe in den Ausführungsinformationen auf der Grundlage der Aufgabenanforderung;

das Berechnen (S203), durch den mindestens einen Prozessor und auf der Grundlage der aktualisierten Ausführungsinformationen für die Daten und für jeden von mehreren Speicherorten auf der mindestens einen Speichervorrichtung, eines speicherortspezifischen Kostenwertes der Daten;

das Bestimmen (S204), durch den mindestens einen Prozessor und auf der Grundlage des berechneten Kostenwertes, eines Zielspeicherortes auf der mindestens einen Speichervorrichtung zum Speichern der Daten; und

das Ausführen der Aufgabe;

wobei das Verfahren des Weiteren umfasst, in Reaktion darauf, dass ein momentaner Speicherort der Daten nicht der Zielspeicherort ist, vor dem Ausführen der Aufgabe, parallel zum Ausführen der Aufgabe oder nach dem Ausführen der Aufgabe die Daten erneut an dem Zielspeicherort zu speichern,

wobei der Kostenwert auf der Grundlage sowohl von Zeitkosten als auch von Preiskosten berechnet wird, und wobei die Zeitkosten der Daten auf der Grundlage einer erforderlichen Zeit, einer gewünschten Zeit und eines Strafwertes für jede der einen oder mehreren Aufgaben berechnet werden, wobei der Strafwert einen Grad der Unannehmbarkeit einer Aufgabenausführungs-Mehrzeit der einen oder mehreren Aufgaben darstellt.

2. Verfahren nach Anspruch 1, wobei die mehreren Speicherorte Speicherorte unterschiedlicher Speichertypen umfassen und die unterschiedlichen Speichertypen mindestens zwei von Folgendem umfassen: Standardspeicher, Speicher mit geringer Zugriffshäufigkeit, Archivspeicher, und Kaltdaten-Archivspeicher.

3. Verfahren nach einem der Ansprüche 1 und 2, wobei der Kostenwert auf der Grundlage sowohl der Kosten für die Speicherung als auch der Kosten für die Ausführung berechnet wird.

4. Verfahren nach einem der Ansprüche 1 bis 3, wobei das Berechnen des Kostenwertes das Berechnen einer Summe oder gewichteten Summe der Zeitkosten und der Preiskosten umfasst.

5. Verfahren nach einem der Ansprüche 1-3, wobei die Preiskosten der Daten auf der Grundlage eines Servicepreises und eines gewünschten Preises von jeder der einen oder mehreren Aufgaben berechnet werden, und optional wobei der Servicepreis eine Summe oder gewichtete Summe eines Aufgabenausführungspreises, eines Datenspeicherpreises und eines Datenerhaltpreises ist.

6. Verfahren nach einem der Ansprüche 1 bis 5, wobei für jede der einen oder mehreren Aufgaben die Ausführungsinformationen des Weiteren eines oder mehrere von Folgendem beschreiben: einen Aufgabentyp, eine für die Aufgabe erforderliche Zeitdauer, und eine für die Aufgabe erforderliche Ressourcenmenge.

7. Verfahren nach einem der Ansprüche 1 bis 6, des Weiteren umfassend nach der Ausführung der Aufgabe das Speichern des Ausführungsergebnisses an einem zufälligen Speicherort oder einem vorgegebenen Standardspeicherort.

8. Verfahren nach Anspruch 7, wobei die Daten in einer isolierten Domäne gespeichert werden, und wobei das Ausführen der Aufgabe umfasst: Erstellen einer Kopie der Daten, und Verwenden der erstellten Kopie zur Ausführen der Aufgabe.

9. Verfahren nach einem der Ansprüche 1 bis 8, wobei die Aufgabenanforderung von einem ersten Benutzer stammt und die Daten zu einem zweiten Benutzer gehören, der sich von dem ersten Benutzer unterscheidet.

10. Verfahren nach einem der Ansprüche 1 bis 9, wobei das Bestimmen eines Zielspeicherortes der Daten gemäß dem berechneten Kostenwert umfasst:
Auswählen eines Speicherortes mit dem kleinsten Kostenwert als den Zielspeicherort der Daten.

11. Datenmanagementsystem, umfassend:

eine Anforderungserhalteinheit (901) zum Erhalten einer Aufgabenanforderung, wobei die Aufgabenanforderung angibt, Daten abzurufen, die auf mindestens einer Speichervorrichtung gespeichert sind, um eine Aufgabe auszuführen;

eine Ausführungsinformationspflegeeinheit (902) zum Aktualisieren von Ausführungsinformationen für die Daten auf der Grundlage der Aufgabenanforderung, wobei die Ausführungsinformationen für die Daten einen Aufgabensatz von einer oder mehreren Aufgaben beschreiben, die eine Abfrage der Daten benötigen, wobei die Ausführungsinformationen eine Ausführungshäufigkeit von jeder der einen oder mehreren Aufgaben umfassen, wobei das Aktualisieren der Ausführungsinformationen für die Daten umfasst:

in Reaktion auf das Bestimmen, dass die Aufgabe nicht in dem Aufgabensatz enthalten ist, das Hinzufügen der Aufgabe zu dem Aufgabensatz, so dass die Ausführungshäufigkeit der Aufgabe in den aktualisierten Ausführungsinformationen enthalten ist; oder
in Reaktion auf das Bestimmen, dass die Aufgabe in dem Aufgabensatz enthalten ist, das Einstellen der Ausführungshäufigkeit der Aufgabe in den Ausführungsinformationen auf der Grundlage der Aufgabenanforderung;
eine Kostenberechnungseinheit (903) zum Berechnen auf der Grundlage der aktualisierten Ausführungsinformationen für die Daten und für jeden von mehreren Speicherorten auf der mindestens einen Speichervorrichtung, eines speicherortspezifischen Kostenwertes der Daten; und
eine Speicherortauswahleinheit (904) zum Bestimmen, auf der Grundlage des berechneten Kostenwertes, eines Zielspeicherortes auf der mindestens einen Speichervorrichtung zum Speichern der Daten,
wobei der Kostenwert auf der Grundlage sowohl von Zeitkosten als auch von Preiskosten berechnet wird, und wobei die Zeitkosten der Daten auf der Grundlage einer erforderlichen Zeit, einer gewünschten Zeit und eines Strafwertes für jede der einen oder mehreren Aufgaben berechnet werden, wobei der Strafwert einen Grad der Unannehmbarkeit einer Aufgabenausführungs-Mehrzeit der einen oder mehreren Aufgaben, und
wobei das Datenmanagementsystem des Weiteren eine Einheit umfasst zum:

Ausführen der Aufgabe; und
in Reaktion darauf, dass ein momentaner Speicherort der Daten nicht der Zielspeicherort ist, erneuten Speichern der Daten an dem Zielspeicherort vor dem Ausführen der Aufgabe, parallel zum Ausführen der Aufgabe oder nach dem Ausführen der Aufgabe.

12. Nicht-transientes, computerlesbares Speichermedium, das ein Programm speichert, wobei das Programm Instruktionen umfasst, die, wenn sie durch einen Prozessor einer elektronischen Vorrichtung ausgeführt werden, die elektronische Vorrichtung instruieren, das Verfahren nach einem der Ansprüche 1 bis 10 durchzuführen.

13. Computerprogrammprodukt, umfassend Computerprogramminstruktionen, die, wenn sie durch einen Prozessor ausgeführt werden, das Implementieren des Verfahrens nach einem der Ansprüche 1 der 10 veranlassen.

**Revendications**

1. Procédé de gestion de données mis en oeuvre par ordinateur, comprenant de :

obtenir (S201), par au moins un processeur, une demande de tâche, la demande de tâche indiquant de récupérer des données stockées sur au moins un dispositif de stockage pour exécuter une tâche ;
mettre à jour (S202) des informations d'exécution pour les données par ledit au moins un processeur et sur la base de la demande de tâche, les informations d'exécution pour les données décrivant un ensemble de tâches d'une ou plusieurs tâches qui nécessitent la récupération des données, dans lequel les informations d'exécution comprennent une fréquence d'exécution de chacune desdites une ou plusieurs tâches, dans lequel mettre à jour les informations d'exécution pour les données comprend de :

en réponse à la détermination que ladite tâche n'est pas comprise dans l'ensemble de tâches, ajouter ladite tâche à l'ensemble de tâches de sorte que la fréquence d'exécution de ladite tâche soit comprise dans les informations d'exécution mises à jour ; ou
en réponse à la détermination que ladite tâche est comprise dans l'ensemble de tâches, ajuster la fréquence d'exécution de ladite tâche dans les informations d'exécution sur la base de la demande de tâche ;
calculer (S203), par ledit au moins un processeur et sur la base des informations d'exécution mises à jour pour les données et pour chacun d'une pluralité d'emplacements de stockage sur ledit au moins un dispositif de stockage, une valeur de coût spécifique à l'emplacement de stockage des données ;
déterminer (S204), par ledit au moins un processeur et sur la base de la valeur de coût calculée, un emplacement de stockage objectif sur ledit au moins un dispositif de stockage pour stocker lesdites données ; et

exécuter ladite tâche ;

dans lequel le procédé comprend en outre, en réponse à un emplacement de stockage actuel des données qui n'est pas l'emplacement de stockage objectif, de restocker les données à l'emplacement de stockage objectif avant l'exécution de la tâche, en parallèle à l'exécution de la tâche ou après l'exécution de la tâche, dans lequel la valeur de coût est calculée sur la base d'un coût en temps et d'un coût en prix, et dans lequel le coût en temps des données est calculé sur la base d'un temps requis, d'un temps souhaité et d'une valeur de pénalité pour chacune desdites une ou plusieurs tâches, la valeur de pénalité représentant un degré d'inacceptabilité du temps supplémentaire d'exécution de tâche desdites une ou plusieurs tâches.

2. Procédé selon la revendication 1, dans lequel la pluralité d'emplacements de stockage comprend des emplacements de stockage de différents types de stockage, et les différents types de stockage comprennent au moins deux des suivants : stockage standard, stockage à faible fréquence d'accès, stockage d'archives et stockage d'archives froides.

3. Procédé selon l'une quelconque des revendications 1 à 2, dans lequel la valeur de coût est calculée sur la base d'un coût de stockage et d'un coût d'exécution.

4. Procédé selon l'une quelconque des revendications 1 à 3, dans lequel le calcul de la valeur de coût comprend de calculer une somme ou une somme pondérée du coût en temps et du coût en prix.

5. Procédé selon l'une quelconque des revendications 1 à 3, dans lequel le coût en prix des données est calculé sur la base d'un prix de service et d'un prix souhaité pour chacune desdites une ou plusieurs tâches, et, en option, le prix de service est une somme ou une somme pondérée d'un prix d'exécution de la tâche, d'un prix de stockage des données et d'un prix d'obtention des données.

6. Procédé selon l'une quelconque des revendications 1 à 5, dans lequel, pour chacune desdites une ou plusieurs tâches, les informations d'exécution décrivent en outre un ou plusieurs des éléments suivants : un type de tâche, une quantité de temps nécessaire pour la tâche et une quantité de ressources nécessaires pour la tâche.

7. Procédé selon l'une quelconque des revendications 1 à 6, conprenant en outre, après l'exécution de la tâche, de stocker le résultat d'exécution dans un emplacement de stockage aléatoire ou un emplacement de stockage par défaut.

8. Procédé selon la revendication 7, dans lequel les données sont stockées dans un domaine isolé, et dans lequel exécuter la tâche comprend de : créer une copie desdites données et utiliser la copie créée pour exécuter la tâche.

9. Procédé selon l'une quelconque des revendications 1 à 8, dans lequel la demande de tâche provient d'un premier utilisateur et les données appartiennent à un second utilisateur différent du premier utilisateur.

10. Procédé selon l'une quelconque des revendications 1 à 9, dans lequel déterminer un emplacement de stockage cible des données en fonction de la valeur de coût calculée comprend de :
sélectionner un emplacement de stockage présentant la valeur de coût la plus faible en tant qu'emplacement de stockage cible des données.

11. Système de gestion de données comprenant :

une unité d'obtention de demande (901) pour obtenir une demande de tâche, la demande de tâche indiquant de récupérer des données stockées sur au moins un dispositif de stockage pour exécuter une tâche ;
une unité de maintenance d'informations d'exécution (902) pour mettre à jour des informations d'exécution pour les données sur la base de la demande de tâche, les informations d'exécution pour les données décrivant un ensemble de tâches d'une ou plusieurs tâches qui nécessitent la récupération des données, dans lequel les informations d'exécution comprennent la fréquence d'exécution de chacune desdites une ou plusieurs tâches, dans lequel mettre à jour les informations d'exécution pour les données comprend de : en réponse à la détermination que ladite tâche n'est pas comprise dans l'ensemble de tâches, ajouter ladite tâche à l'ensemble de tâches de sorte que la fréquence d'exécution de ladite tâche soit comprise dans les informations d'exécution mises à jour ; ou en réponse à la détermination que ladite tâche est comprise dans l'ensemble de tâches, ajuster la fréquence d'exécution de ladite tâche dans les informations d'exécution sur la base de la demande de tâche ;
une unité de calcul de coût (903) pour calculer, sur la base des informations d'exécution mises à jour pour les données et pour chacun d'une pluralité d'emplacements de stockage sur ledit au moins un dispositif de stockage, une valeur de coût spécifique à l'emplacement de stockage des données ; et

une unité de sélection d'emplacement de stockage (904) pour déterminer, sur la base de la valeur de coût calculée, un emplacement de stockage objectif sur ledit au moins un dispositif de stockage pour stocker les données,

dans lequel la valeur de coût est calculée sur la base d'un coût en temps et d'un coût en prix, et dans lequel le coût en temps des données est calculé sur la base d'un temps requis, d'un temps souhaité et d'une valeur de pénalité pour chacune desdites une ou plusieurs tâches, la valeur de pénalité représentant un degré d'inacceptabilité du temps supplémentaire d'exécution de tâche desdites une ou plusieurs tâches, et

dans lequel le système de gestion de données comprend en outre une unité pour :

exécuter ladite tâche ; et

en réponse à un emplacement de stockage actuel des données qui n'est pas l'emplacement de stockage objectif, restocker les données à l'emplacement de stockage objectif avant l'exécution de la tâche, en parallèle à l'exécution de la tâche, ou après l'exécution de la tâche.

12. Support de stockage non transitoire lisible par ordinateur qui stocke un programme, le programme comprenant des instructions qui, lorsqu'elles sont exécutées par un processeur d'un dispositif électronique, ordonnent au dispositif électronique de mettre en oeuvre le procédé selon l'une quelconque des revendications 1 à 10.

13. Produit programme d'ordinateur, comprenant des instructions informatiques qui, lorsqu'elles sont exécutées par un processeur, entraînent la mise en oeuvre du procédé selon l'une quelconque des revendications 1 à 10.

*Fig. 1*

200

S201

Obtain a task request, the task request
indicating that data stored is to be invoked
to execute a task

S202

Update execution information of the data, the
execution information of the data describing one
or more tasks to invoke the data and an execution
frequency of each task

S203

Calculate, based on the updated execution
information, a storage location-specific cost
value for each of a plurality of storage locations

S204

Select a storage location with the smallest
cost value as a target storage location
of the data

*Fig. 2*

<u>300</u>                                                                    S301

Obtain a task request, and determine, based
on the task request, a data set that needs to be
invoked to execute the task

S302

For each piece of data in the data set, update execution
information of the data, the execution information of
the data describing one or more tasks to invoke the
data and an execution frequency of each task

S303

For each piece of data in the data set, calculate, based
on the updated execution information, a cost value
of the data specific to each of a plurality of
storage locations

S304

For each piece of data in the data set, select a
storage location with the smallest cost value as a
target storage location of the data

S305

Re-store each piece of data in the data set
based on the determined target storage location

*Fig. 3*

Fig. 4

Fig. 5

Data storage bucket ⌐601
of a data user U$_i$

Data ⌐611

Data interface I$_j$ ⌐621

602
Program storage
bucket of a
program user U$_j$

612
Code

631
Program

614
Result

604
Output result
bucket of the
data user U$_i$

605
Download area
of the program
user U$_j$

Task execution
space storage bucket
of the program user U$_j$
603

## Fig. 6

A data management platform
receives a request
S701

The data management platform directly
stores data without cost calculation
S702

## Fig. 7

S801 — Receive a user request

S802 — Create a computing cluster

S803 — Download a required data set D to the cluster

S804 — Execute a task on the cluster

S805 — Store execution result data

S806 — Update a task set of each piece of data in the required data set D

S807 — Calculate a storage location-specific cost value for each piece of data in D

S808 — Select a storage location with the smallest cost value as a target storage location for each piece of data in D

S809 — Re-store each piece of data in D

*Fig. 8*

900

Request obtaining unit 901

Execution information maintenance unit 902

Cost calculation unit 903

Storage location selection unit 904

*Fig. 9*

| Processor 1004 | Storage device 1010 | Input device 1006 | Output device 1008 | Communication device 1012 |
|---|---|---|---|---|

1002

Working memory
1014

| Operating system 1016 | Application 1018 |
|---|---|

*Fig. 10*

EP 4 009 170 B1

**EP 4 009 170 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10671290 B2